# FASCICULE DE BREVET EUROPEEN

(11) **EP 1 282 534 B1**
(45) Date de publication et mention de la délivrance du brevet: **26.08.2009**
(21) Numéro de dépôt: 01936509.7
(22) Date de dépôt: 14.05.2001
(51) Int. Cl.: B60H 1/00

(54) **DISPOSITIF DE REGULATION THERMIQUE POUR VEHICULE AUTOMOBILE ET PROCEDES POUR LA MISE EN OEUVRE DE CE DISPOSITIF**
THERMISCHE REGELVORRICHTUNG FÜR KRAFTFAHRZEUGE UND VERFAHREN ZUM EINSETZEN DIESER VORRICHTUNG
HEAT CONTROL DEVICE FOR MOTOR VEHICLE AND METHODS USING SAME

(30) Priorité: 15.05.2000 FR 0006116; 28.11.2000 FR 0015365
(43) Date de publication de la demande: 12.02.2003
(73) Titulaire: Peugeot Citroën Automobiles SA, 92200 Neuilly sur Seine (FR); Visteon Global Technologies, Inc., Dearborn, Michigan 48126-2490 (US)
(72) Inventeur: AMARAL, Manuel, F-94400 Vitry-sur-Seine (FR); GIELDA, Thomas, Brighton, MI 48114 (US)
(74) Mandataire: de la Bigne, Guillaume Michel Marie
(86) Numéro de dépôt international: PCT/FR2001/001459
(87) Numéro de publication internationale: WO 2001/087652

(56) Documents cités:
- EP-A- 0 595 714
- EP-A- 0 970 833
- DE-A- 19 930 148
- US-A- 5 537 956

## Description

La présente invention concerne un dispositif de régulation thermique pour véhicule automobile et des procédés pour la mise en oeuvre de ce dispositif.

Elle s'applique en particulier à la climatisation d'un habitacle du véhicule.

On connaît déjà dans l'état de la technique, notamment d'après FR-2 697 210, un dispositif de régulation thermique pour véhicule automobile, du type comprenant :
- une pompe à chaleur comportant un circuit principal de fluide frigorigène à compression prélevant des calories d'une source froide pour les transférer vers une source chaude,
- la source froide ou la source chaude comportant un premier échangeur thermique fluide frigorigène/liquide caloporteur couplant thermiquement le circuit principal de fluide frigorigène à un circuit secondaire de liquide caloporteur pouvant être raccordé sélectivement à au moins deux échangeurs thermiques.

Le circuit à compression comprend habituellement un évaporateur, en échange thermique avec la source froide, et un condenseur, en échange thermique avec la source chaude, ces éléments étant raccordés entre eux par un compresseur et un détendeur. Le fluide frigorigène se vaporise dans l'évaporateur en enlevant de la chaleur à la source froide. Le compresseur aspire le fluide frigorigène vaporisé et le refoule dans le condenseur refroidi (par échange thermique avec la source chaude) dans lequel il se condense. Le détendeur laisse passer le fluide frigorigène liquide vers l'évaporateur en abaissant sa pression.

Une pompe à chaleur peut être utilisée soit pour chauffer un espace ou un organe soit pour refroidir cet espace ou cet organe.

Dans FR-2 697 210, la source froide comporte un premier échangeur thermique fluide frigorigène/liquide caloporteur couplant thermiquement le circuit principal de fluide frigorigène à un premier circuit secondaire de liquide caloporteur, et la source chaude comporte un second échangeur thermique fluide frigorigène/liquide caloporteur couplant thermiquement le circuit principal de fluide frigorigène à un second circuit secondaire de liquide caloporteur. Les circuits secondaires peuvent être raccordés sélectivement, par l'intermédiaire de vannes appropriées, à un échangeur thermique extérieur, placé dans le compartiment moteur du véhicule, et à un échangeur thermique intérieur, placé dans l'habitacle du véhicule. En agissant sur les vannes, on peut utiliser la pompe à chaleur soit pour réfrigérer l'habitacle d'un véhicule (dans ce premier cas, la source chaude est l'échangeur thermique extérieur et la source froide est l'échangeur thermique intérieur), soit pour réchauffer l'habitacle (dans ce second cas, la source chaude est l'échangeur thermique intérieur et la source froide est l'échangeur thermique extérieur).

On notera dans ce dernier cas que les performances de la pompe à chaleur sont limitées par la température de l'air extérieur. En effet, en saison froide, la température de l'air n'est pas suffisante pour obtenir un rendement satisfaisant de la pompe à chaleur, lorsque celle-ci est utilisée à des fins de chauffage de l'habitacle. De plus, le givrage de la source froide en saison froide peut nuire aux performances de fonctionnement de la pompe à chaleur.

Par ailleurs, la réversibilité des échangeurs extérieur et intérieur (utilisés chacun soit comme source chaude soit comme source froide) conduit essentiellement aux deux inconvénients suivants :
1) la performance de chaque échangeur est limitée du fait qu'elle ne peut pas être optimisée pour un fonctionnement spécifique de l'échangeur en source chaude ou bien en source froide ;
2) l'hygrométrie de l'air environnant l'échangeur thermique intérieur est difficile à contrôler.

Le second inconvénient se révèle tout particulièrement lors de la climatisation de l'habitacle du véhicule en mi-saison. Dans ce cas, l'échangeur thermique intérieur est susceptible de connaître de fréquentes alternances de ses modes de fonctionnement de réfrigération et de chauffage de l'habitacle. Ainsi, en mode réfrigération, l'échangeur thermique intérieur se charge d'eau. Lorsque ce dernier passe en mode chauffage, l'eau accumulée en mode réfrigération est évacuée dans l'habitacle par évaporation. FR-2 697 210 propose de pallier cet inconvénient au moyen d'un échangeur thermique auxiliaire agencé au voisinage de l'échangeur thermique intérieur. Toutefois, cet échangeur auxiliaire n'est pas fonctionnel dans certains cas notamment pour des températures de mi-saison voisines de 15°C.

L'invention a notamment pour but d'optimiser les performances d'un dispositif de régulation thermique à pompe à chaleur en particulier lorsqu'il est utilisé pour réchauffer ou réfrigérer l'habitacle d'un véhicule automobile ou encore lorsqu'il est utilisé pour réguler thermiquement un moteur permettant de mouvoir le véhicule.

A cet effet, l'invention a pour objet un dispositif de régulation thermique pour véhicule automobile, du type

décrit dans FR-2 697 210, tel que défini dans la revendication 1. Suivant des caractéristiques de différents modes de réalisation de ce dispositif :
- la source froide comporte un premier échangeur thermique fluide frigorigène/liquide caloporteur couplant thermiquement le circuit principal de fluide frigorigène à un premier circuit secondaire de liquide caloporteur pouvant être raccordé sélectivement à l'échangeur de refroidissement, l'échangeur extérieur et un échangeur thermique dit froid, et la source chaude comporte un second échangeur thermique fluide frigorigène/liquide caloporteur couplant thermiquement le circuit principal de fluide frigorigène à un second circuit secondaire de liquide caloporteur pouvant être raccordé sélectivement à l'échangeur de refroidissement, l'échangeur extérieur et un échangeur thermique dit chaud ;
- les premier et second circuits secondaires sont susceptibles d'être raccordés au circuit de refroidissement au moyen :
   - d'une première vanne de dérivation, de type trois voies, comprenant une première voie raccordée aux sorties des premier et second échangeurs fluide frigorigène/liquide caloporteur, une seconde voie raccordée à l'entrée de l'échangeur extérieur et une troisième voie raccordée à une branche du circuit de refroidissement en amont de l'échangeur de refroidissement, et
   - d'une seconde vanne de dérivation, de type trois voies, comprenant une première voie raccordée aux entrées des premier et second échangeurs fluide frigorigène/liquide caloporteur, une seconde voie raccordée à une branche du circuit de refroidissement en aval de l'échangeur de refroidissement et une troisième voie raccordée à la sortie de l'échangeur extérieur ;
- les premier et second circuits secondaires sont susceptibles d'être raccordés au circuit de refroidissement au moyen :
   - d'une première vanne de dérivation, de type deux voies, comprenant une première voie raccordée à une branche du circuit de refroidissement, en amont de l'échangeur de refroidissement, et une seconde voie raccordée à des branches des premier et second circuits secondaires, en amont de l'échangeur extérieur, et
   - d'une seconde vanne de dérivation, de type deux voies, comprenant une première voie raccordée à une branche du circuit de refroidissement, en aval de l'échangeur de refroidissement, et une seconde voie raccordée à des branches des premier et second circuits secondaires en aval de l'échangeur extérieur ;
- l'échangeur de refroidissement est un échangeur liquide caloporteur/air ;
- le liquide caloporteur du circuit de refroidissement est un mélange d'eau et d'antigel ;
- l'échangeur extérieur et l'échangeur de refroidissement sont reliés entre eux de façon à former un module unique susceptible d'être pré-assemblé avant montage dans le véhicule ;
- l'organe exothermique est un moteur.

L'invention a également pour objet un procédé pour la mise en oeuvre du dispositif tel que défini ci-dessus, **caractérisé en ce que** l'on fait circuler le liquide caloporteur d'au moins un circuit secondaire à la fois dans l'échangeur extérieur et l'échangeur de refroidissement.

L'invention a encore pour objet un procédé pour la mise en oeuvre du dispositif tel que défini ci-dessus, **caractérisé en ce que** l'on fait circuler le liquide caloporteur du circuit de refroidissement à la fois dans l'échangeur extérieur et l'échangeur de refroidissement.

L'invention sera mieux comprise à la lecture de la description qui va suivre, donnée uniquement à titre d'exemple et faite en se référant aux dessins dans lesquels :
- les figures 1 et 2 sont des vues schématiques, dans des première et deuxième configurations d'utilisation respectivement, d'un dispositif de régulation thermique pour véhicule automobile, selon un premier mode de réalisation de l'invention;
- la figure 3 est une vue partielle du dispositif de régulation thermique illustré sur les figures précédentes, montrant ce dispositif dans une troisième configuration d'utilisation ;
- la figure 4 est une vue similaire à la figure 3 d'un dispositif de régulation thermique pour véhicule automobile, selon un second mode de réalisation de l'invention.

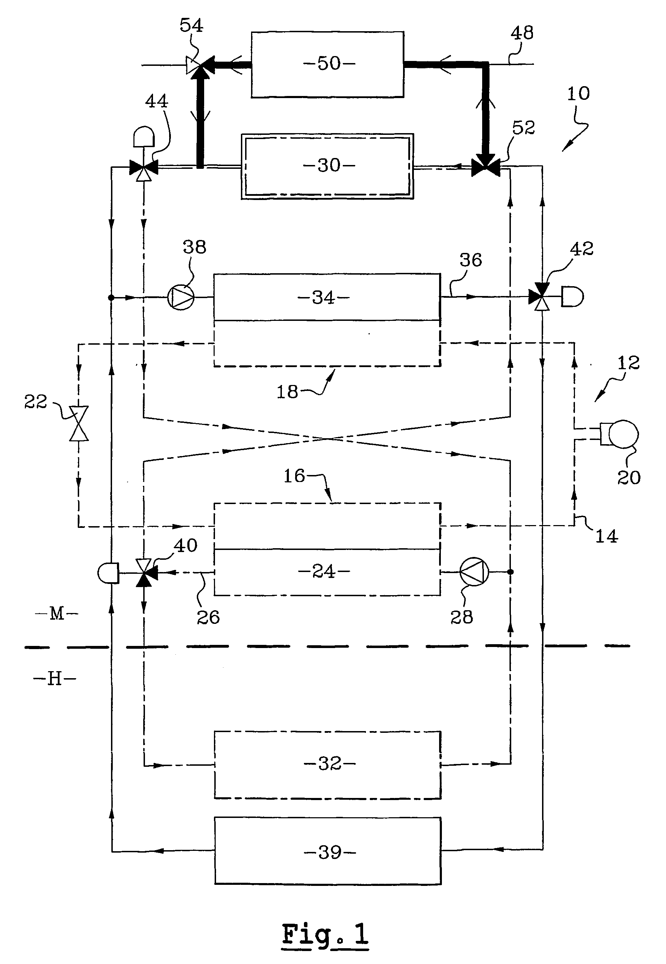

On a représenté sur les figures 1 à 3, un dispositif de régulation thermique pour véhicule automobile selon un premier mode de réalisation de l'invention, désigné par la référence générale 10.

Dans ce qui suit, deux organes sont dits couplés thermiquement entre eux lorsqu'ils échangent de la chaleur entre eux au moyen d'un échangeur thermique approprié.

Le dispositif de régulation thermique 10 comprend une pompe à chaleur 12 comportant un circuit principal 14 de fluide frigorigène, de type à compression, prélevant des calories d'une source froide 16 pour les transférer au moins partiellement vers une source chaude 18.

Les sources froide 16 et chaude 18 sont raccordées entre elles par un compresseur 20 (électrique et/ou mécanique) et une vanne de détente 22. Le fluide frigorigène se vaporise en enlevant de la chaleur à la source froide 16. Le compresseur 20 aspire le fluide vaporisé et le refoule vers la source chaude où il se condense en refroidissant. La vanne de détente 22 laisse passer le fluide frigorigène liquide vers la source froide 16 en abaissant sa pression. Le sens de circulation du fluide frigorigène dans le circuit 14 est indiqué par des flèches sur la figure 1.

La source froide 1.6 comporte un premier échangeur thermique 24 fluide frigorigène/liquide caloporteur couplant thermiquement le circuit principal 14 de fluide frigorigène à un premier circuit secondaire 26 de liquide caloporteur. Ce dernier comporte une pompe 28 de mise en circulation du liquide caloporteur, raccordée à l'entrée du premier échangeur thermique 24.

Le premier circuit secondaire 26 peut être raccordé sélectivement à un échangeur thermique dit extérieur 30 et à un échangeur thermique dit froid 32.

Dans l'exemple illustré sur les figures 1 à 3, l'échangeur extérieur 30 est un échangeur liquide caloporteur/air, placé de préférence dans le compartiment moteur M du véhicule, et l'échangeur froid 32 est un échangeur liquide caloporteur/air, placé dans l'habitacle H du véhicule.

La source chaude 18 comporte un second échangeur thermique 34, fluide frigorigène/liquide caloporteur couplant thermiquement le circuit principal 14 de fluide frigorigène à un second circuit secondaire 36 de liquide caloporteur. Ce dernier comporte une pompe 38 de mise en circulation du liquide caloporteur, raccordée à l'entrée du second échangeur thermique 34.

Le second circuit secondaire 36 peut être raccordé sélectivement à l'échangeur extérieur 30 et à un échangeur thermique dit chaud 39.

Dans l'exemple illustré sur les figures 1 à 3, l'échangeur chaud 39 est un échangeur liquide caloporteur/air placé de préférence dans l'habitacle H du véhicule.

Un ventilateur classique, non représenté sur les figures, permet de faire circuler un flux d'air à travers les échangeurs froid 32 et chaud 39.

La pompe à chaleur 12, raccordée aux premier et second échangeurs thermiques 24 , 34, est agencée par exemple dans le compartiment moteur du véhicule.

Le fluide frigorigène circulant dans le circuit principal est d'un type classique. Ce fluide frigorigène est choisi par exemple parmi un dérivé chloré et fluoré du méthane ou de l'éthane (Fréon), un hydrocarbure, l'ammoniac ou le dioxyde de carbone. Le liquide caloporteur circulant dans le premier 26 ou second 36 circuit secondaire est de préférence un mélange d'eau et d'antigel (glycol).

Le raccordement des deux circuits secondaires 26, 36 de liquide caloporteur, respectivement aux échangeurs extérieur 30, froid 32, et chaud 39, est réalisé au moyen d'une vanne trois voies 40 du premier circuit secondaire, d'une vanne trois voies 42 du second circuit secondaire et d'une vanne trois voies 44 commune aux deux circuits secondaires.

La vanne trois voies 40 du premier circuit secondaire 26 est raccordée à la sortie du premier échangeur thermique 24 fluide frigorigène/liquide caloporteur de la source froide, à l'entrée de l'échangeur extérieur 30 et à l'entrée de l'échangeur froid 32.

La vanne 42 du second circuit secondaire 36 est raccordée à la sortie du second échangeur thermique 34 fluide frigorigène/liquide caloporteur de la source chaude, à l'entrée de l'échangeur extérieur 30 et à l'entrée de l'échangeur chaud 39.

La vanne 44, commune aux premier 26 et second 36 circuits secondaires de liquide caloporteur est raccordée à l'entrée du premier échangeur thermique 24 fluide frigorigène/liquide caloporteur de la source froide, à l'entrée du second échangeur thermique 34 fluide frigorigène/liquide caloporteur de la source chaude et à la sortie de l'échangeur extérieur 30.

Les vannes 40 à 44 sont commandées par des moyens classiques électriques, mécaniques, thermomécaniques ou pneumatiques.

Le dispositif de régulation thermique 10 comprend également des moyens de refroidissement d'un organe exothermique du véhicule tel qu'un moteur du véhicule comme dans l'exemple décrit. Ce moteur, destiné à mouvoir le véhicule, est de préférence de type thermique. Toutefois, en variante, le moteur peut être d'un autre type, notamment électrique.

Les moyens de refroidissement du moteur comprennent un circuit 48 de liquide caloporteur, dit circuit de refroidissement, raccordé à un échangeur thermique de refroidissement 50.

Dans l'exemple illustré sur les figures, l'échangeur de refroidissement 50 est un échangeur liquide caloporteur/air placé de préférence dans le compartiment moteur M du véhicule. Un ventilateur classique, non représenté sur les figures, permet de faire circuler un flux d'air à travers cet échangeur de refroidissement 50.

Le liquide caloporteur circulant dans le circuit de refroidissement 48 est de préférence un mélange d'eau et d'antigel (glycol).

Les premier 26 et second 36 circuits secondaires sont destinés à être raccordés, dans certaines configurations d'utilisation du dispositif 10, à l'échangeur de refroidissement 50.

A cet effet, dans le premier mode de réalisation de l'invention, les premier 26 et second 36 circuits secondaires sont susceptibles d'être raccordés au circuit de refroidissement à l'aide des moyens suivants.

Une première vanne de dérivation 52, de type trois voies, comprend une première voie raccordée aux sorties des premier 24 et second 34 échangeurs fluide frigorigène/liquide caloporteur, une seconde voie raccordée à l'entrée de l'échangeur extérieur 30 et une troisième voie raccordée à une branche du circuit de refroidissement 48 en amont de l'échangeur de refroidissement 50.

Une seconde vanne de dérivation 54, de type trois voies, comprend une première voie raccordée aux entrées des premier 24 et second 34 échangeurs fluide frigorigène/liquide caloporteur, une seconde voie raccordée à une branche du circuit de refroidissement 48 en aval de l'échangeur de refroidissement 50 et une troisième voie raccordée à la sortie de l'échangeur extérieur 30.

Les vannes de dérivation 52, 54 sont commandées par des moyens classiques électriques, mécaniques, thermomécaniques ou pneumatiques.

La figure 1 illustre la configuration du dispositif de régulation thermique 10 en mode de réfrigération de l'habitacle du véhicule. Dans ce cas, les vannes 40 à 44 sont réglées de manière à raccorder le premier circuit secondaire 26 de liquide caloporteur à l'échangeur froid et le second circuit secondaire 36 de liquide caloporteur à l'échangeur extérieur 30.

Par ailleurs, les vannes de dérivation 52, 54 sont réglées de façon à faire circuler le liquide caloporteur du second circuit secondaire 36 à la fois dans l'échangeur extérieur 30 et l'échangeur de refroidissement 50. Ce réglage des vannes de dérivation 52, 54 est établi de préférence lorsque les moyens de refroidissement, pilotés généralement par un thermostat, sont désactivés, si bien que le débit de liquide de refroidissement dans le circuit 48 est nul. On notera que les moyens de refroidissement sont désactivés lorsque le moteur du véhicule est relativement froid, notamment pendant une période plus ou moins longue suivant le démarrage de ce moteur.

Le liquide caloporteur du premier circuit secondaire 26 prélève des calories dans l'habitacle, par l'intermédiaire de l'échangeur froid 32, et les restitue au fluide frigorigène vaporisé, par l'intermédiaire du premier échangeur thermique 24 fluide frigorigène/liquide caloporteur.

Le liquide caloporteur du second circuit secondaire 36 prélève des calories au fluide frigorigène condensé, par l'intermédiaire du second échangeur thermique 34 fluide frigorigène/liquide caloporteur, et les évacue à l'extérieur du véhicule, par l'intermédiaire de l'échangeur extérieur 30 et de l'échangeur de refroidissement 50.

L'échangeur de refroidissement 50 complétant la surface d'échange thermique de l'échangeur extérieur 30, le fonctionnement de la pompe à chaleur est optimisé grâce à une évacuation plus efficace des calories de la source chaude 18 par le liquide caloporteur circulant dans le second circuit secondaire 36 et ces échangeurs 30, 50.

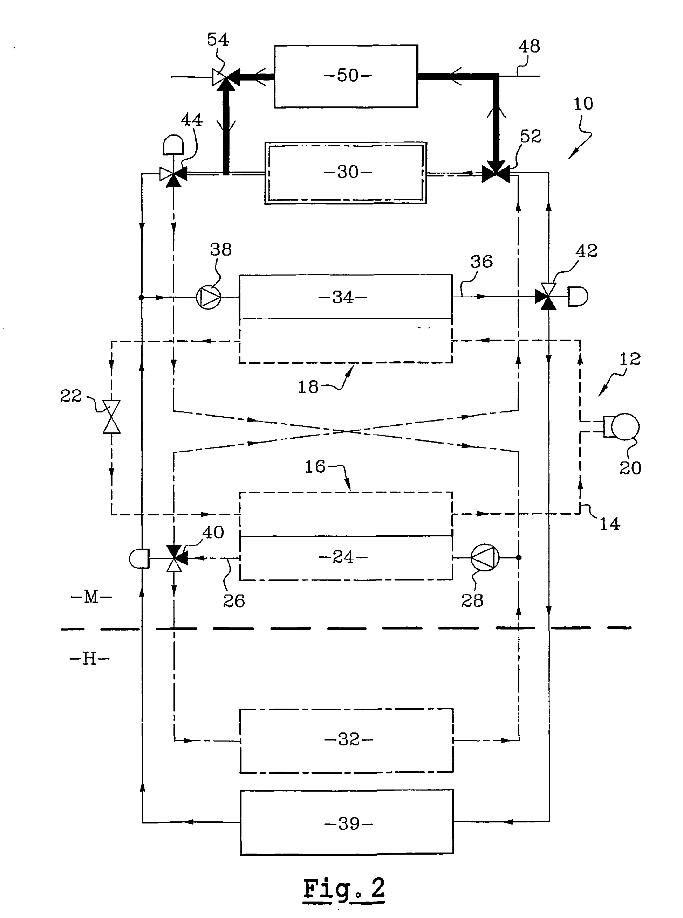

La figure 2 illustre le dispositif 10 dans une configuration de chauffage de l'habitacle. Dans ce cas, les vannes 40 à 44 sont réglées de manière à raccorder le premier circuit secondaire 26 de liquide caloporteur à l'échangeur extérieur 30 et le second circuit secondaire 36 de liquide caloporteur à l'échangeur chaud 39.

Par ailleurs, les vannes de dérivation 52, 54 sont réglées de façon analogue à la figure 1 pour faire circuler le liquide caloporteur du premier circuit secondaire 26 à la fois dans l'échangeur extérieur 30 et l'échangeur de refroidissement 50. Ce réglage des vannes de dérivation 52, 54 est établi de préférence lorsque les moyens de refroidissement sont désactivés, si bien que le débit de liquide de refroidissement dans le circuit 48 est nul.

Le liquide caloporteur du premier circuit secondaire 26 prélève des calories à l'extérieur du véhicule, par l'intermédiaire de échangeur extérieur 30 et de l'échangeur de refroidissement 50, et les restitue au fluide frigorigène vaporisé, par l'intermédiaire du premier échangeur thermique 24 fluide frigorigène/liquide caloporteur.

Le liquide caloporteur du second circuit secondaire 36 prélève des calories dans le fluide frigorigène condensé, par l'intermédiaire du second échangeur thermique 34 fluide frigorigène/liquide caloporteur, et les restitue dans l'habitacle, par l'intermédiaire de l'échangeur chaud 39.

L'échangeur de refroidissement 50 complétant la surface d'échange thermique de l'échangeur extérieur 30, le fonctionnement de la pompe à chaleur est optimisé grâce à un prélèvement plus efficace des calories dans l'air extérieur par le liquide caloporteur circulant dans le premier circuit secondaire 26 et ces échangeurs 30, 50. Ainsi, les risques de givrage de l'échangeur extérieur 30 en saison froide sont réduits.

Bien entendu, les vannes 40 à 44 peuvent être réglées dans des configurations intermédiaires par rapport aux configurations de réfrigération et de chauffage de l'habitacle illustrées sur les figures 1 et 2, par exemple pour accélérer le chauffage de l'habitacle tout en participant au contrôle du taux d'humidité relative dans celui-ci.

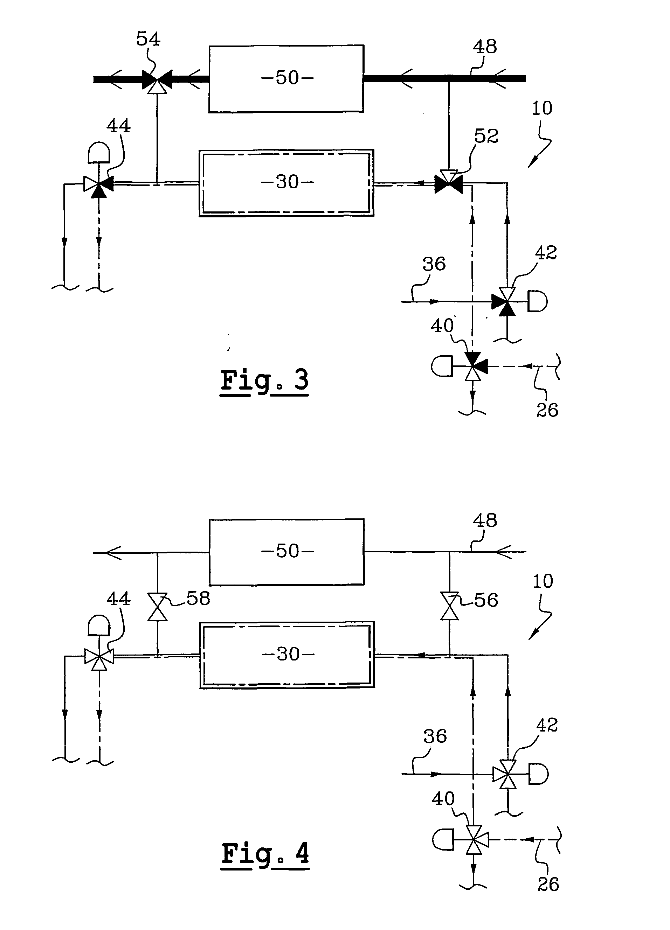

La figure 3 illustre le dispositif 10 dans une configuration de l'habitacle dans laquelle les vannes 40 à 44 sont réglées de façon similaire à la figure 2 (chauffage de l'habitacle). Toutefois, dans ce cas, les moyens de refroidissement du moteur sont activés : le liquide de refroidissement circule dans le circuit de refroidissement 48. De ce fait, les vannes de dérivation 52, 54 sont réglées de façon à isoler le circuit secondaire 26 et l'échangeur extérieur 30 du circuit de refroidissement 48 et de l'échangeur de refroidissement 50.

Selon une configuration non représentée, on pourrait régler les vannes 40 à 44 de façon similaire à la figure 1 (réfrigération de l'habitacle) et les vannes de dérivation 52, 54 de façon similaire à la figure 3. Cette configuration, dans laquelle le circuit secondaire 26 et l'échangeur extérieur 30 sont isolés du circuit de refroidissement 48 et de l'échangeur de refroidissement 50, est établie lors de l'activation des moyens de refroidissement du moteur.

On a représenté sur la figure 4, un dispositif de régulation thermique selon un second mode de réalisation de l'invention. Sur cette figure, les éléments analogues à ceux de figures précédentes sont désignés par des références identiques.

Dans ce cas, les premier 26 et second 36 circuits secondaires sont susceptibles d'être raccordés au circuit de refroidissement 48 à l'aide des moyens suivants.

Une première vanne de dérivation 56, de type deux voies, comprend une première voie raccordée à une branche du circuit de refroidissement 48, en amont de l'échangeur de refroidissement 50, et une seconde voie raccordée à des branches des premier 26 et second 36 circuits secondaires, en amont de l'échangeur extérieur 30.

Une seconde vanne de dérivation 58, de type deux voies, comprenant une première voie raccordée à une branche du circuit de refroidissement 48, en aval de l'échangeur de refroidissement 50, et une seconde voie raccordée à des branches des premier 26 et second 36 circuits secondaires en aval de l'échangeur extérieur 30.

Les vannes de dérivation 56, 58 sont commandées par des moyens classiques électriques, mécaniques, thermomécaniques ou pneumatiques.

Les vannes de dérivation 56, 58 peuvent être réglées de façon à obtenir des configurations de raccordement (ou d'isolation) des circuits secondaires 26, 36 et de refroidissement 48 entre eux analogues aux configurations illustrées sur les figures 1 à 3.

Toutefois, dans ce second mode de réalisation de l'invention, les vannes de dérivation 56, 58 peuvent être également réglées de façon à faire circuler le liquide caloporteur du circuit de refroidissement 48 à la fois dans l'échangeur extérieur 30 et l'échangeur de refroidissement 50. Ce réglage présente un intérêt lorsque l'on souhaite refroidir efficacement le moteur soumis à une surchauffe exceptionnelle, du fait que l'échangeur extérieur 30 complète la surface d'échange thermique de l'échangeur de refroidissement 50.

On notera que les échangeurs extérieur 30 et de refroidissement 50 peuvent être agencés dans le compartiment moteur de diverses manières. En particulier, ces deux échangeurs 30, 50 peuvent être agencés soit l'un derrière l'autre (agencement en empilage) de façon que leurs projections sur un plan sensiblement perpendiculaire à la direction du flux d'air qui les traverse se recouvrent au moins partiellement, soit l'un à coté de l'autre (agencement en mosaïque) de façon que leur projection sur un plan sensiblement perpendiculaire à la direction du flux d'air qui les traverse ne se recouvrent pas.

Par ailleurs, les échangeurs extérieur 30 et de refroidissement 50 peuvent être reliés entre-eux par les vannes de dérivation de façon à former un module unique susceptible d'être pré-assemblé avant montage dans le compartiment moteur.

L'invention ne se limite pas aux modes de réalisation décrits ci-dessus. En particulier, dans le premier mode de réalisation illustré sur les figures 1 à 3, il est possible de prévoir des vannes de dérivation 52, 54 susceptibles d'être réglées de façon à faire circuler le liquide caloporteur du circuit de refroidissement 48 à la fois dans l'échangeur extérieur 30 et l'échangeur de refroidissement 50.

## Revendications

1. Dispositif de régulation thermique pour véhicule automobile, du type comprenant :
- une pompe à chaleur (12) comportant un circuit principal (14) de fluide frigorigène à compression prélevant des calories d'une source froide (16) pour les transférer vers une source chaude (18),
- la source froide (16) ou la source chaude (18) comportant un échangeur thermique (24,34) fluide frigorigène/liquide caloporteur couplant thermiquement le circuit principal (14) de fluide frigorigène à un circuit secondaire (26,36) de liquide caloporteur pouvant être raccordé sélectivement à au moins deux échangeurs thermiques,
**caractérisé en ce qu'**il comprend de plus des moyens de refroidissement d'un organe exothermique du véhicule comprenant un circuit de liquide caloporteur (48), dit circuit de refroidissement raccordé à un échangeur thermique de refroidissement (50), le circuit secondaire (26, 36) pouvant être raccordé sélectivement à l'échangeur de refroidissement (50), un échangeur thermique dit extérieur (30) et un échangeur thermique dit froid (32) ou chaud (39),
l'échangeur extérieur (30) et l'échangeur de refroidissement (50) étant reliés entre eux de façon à former un module unique susceptible d'être pré-assemblé avant montage dans le véhicule.

2. Dispositif selon la revendication 1, **caractérisé en ce que :**
- la source froide (16) comporte un premier échangeur thermique (24) fluide frigongène/liquide caloporteur couplant thermiquement le circuit principal de fluide frigorigène à un premier circuit secondaire (26) de liquide caloporteur pouvant être raccordé sélectivement à l'échangeur de refroidissement (50) , l'échangeur extérieur (30) et un échangeur thermique dit froid (32), et
- la source chaude (18) comporte un second échangeur thermique (34) fluide frigorigène/liquide caloporteur couplant thermiquement le circuit principal (14) de fluide frigorigène à un second circuit secondaire (36) de liquide caloporteur pouvant être raccordé sélectivement à l'échangeur de refroidissement (50) , l'échangeur extérieur (30) et un échangeur thermique dit chaud (39).

3. Dispositif selon la revendication 2, **caractérisé en ce que** les premier (26) et second (36) circuits secondaires sont susceptibles d'être raccordés au circuit de refroidissement (48) au moyen :
- d'une première vanne (52) de dérivation, de type trois voies, comprenant une première voie raccordée aux sorties des premier (24) et second (34) échangeurs fluide frigorigène/liquide caloporteur, une seconde voie raccordée à l'entrée de l'échangeur extérieur (30) et une troisième voie raccordée à une branche du circuit de refroidissement (48) en amont de l'échangeur de refroidissement (50), et
- d'une seconde vanne (54) de dérivation, de type trois voies, comprenant une première voie raccordée aux entrées des premier (24) et second (34) échangeurs fluide frigorigène/liquide caloporteur, une seconde voie raccordée à une branche du circuit de refroidissement (48) en aval de l'échangeur de refroidissement (50) et une troisième voie raccordée à la sortie de l'échangeur extérieur (30).

4. Dispositif selon la revendication 2, **caractérisé en ce que** les premier (26) et second (36) circuits secondaires sont susceptibles d'être raccordés au circuit de refroidissement (48) au moyen :
- d'une première vanne (56) de dérivation, de type deux voies, comprenant une première voie raccordée à une branche du circuit de refroidissement (48), en amont de l'échangeur de refroidissement (50), et une seconde voie raccordée à des branches des premier (26) et second (36) circuits secondaires, en amont de l'échangeur extérieur (30), et
- d'une seconde vanne (58) de dérivation, de type deux voies, comprenant une première voie raccordée à une branche du circuit de refroidissement (48), en aval de l'échangeur de refroidissement (50), et une seconde voie raccordée à des branches des premier (26) et second (36) circuits secondaires en aval de l'échangeur extérieur (30).

5. Dispositif selon l'une quelconque des revendications précédentes, **caractérisé en ce que** l'échangeur de refroidissement (50) est un échangeur liquide caloporteur/air.

6. Dispositif selon l'une quelconque des revendications précédentes, **caractérisé en ce que** le liquide caloporteur du circuit de refroidissement (48) est un mélange d'eau et d'antigel.

7. Dispositif selon l'une quelconque des revendications précédentes, **caractérisé en ce que** l'organe exothermique est un moteur.

8. Procédé pour la mise en oeuvre du dispositif selon l'une quelconque des revendications précédentes, **caractérisé en ce que** l'on fait circuler le liquide caloporteur d'au moins un circuit secondaire (26, 36) à la fois dans l'échangeur extérieur (30) et l'échangeur de refroidissement (50).

9. Procédé pour la mise en oeuvre du dispositif selon l'une quelconque des revendications 2 et 5 à 6 prise en combinaison avec la revendication 4, **caractérisé en ce que** l'on fait circuler le liquide caloporteur du circuit de refroidissement (48) à la fois dans l'échangeur extérieur (30) et l'échangeur de refroidissement (50).

## Claims

1. Motor vehicle temperature regulation apparatus of the type comprising:
· a heat pump (12) comprising a main compression circuit (14) for a refrigerant fluid taking heat from a cold source (16) to transfer it to a hot source (18); and
· the cold source (16) or the hot source (18) having a refrigerant/coolant heat exchanger (24, 34) thermally coupling the main refrigerant circuit (14) to a secondary circuit (26, 36) for a liquid coolant, the secondary circuit being capable of being selectively connected to at least two heat exchangers;
the apparatus being **characterized in that** it further includes cooling means for cooling an exothermal part of the vehicle, the cooling means comprising a cooling circuit (48) for a liquid coolant connected to a cooling heat exchanger (50), the secondary circuit (26, 36) is capable of being selectively connected to the cooling heat exchanger (50), to an "outside" heat exchanger (30), and to a "cold" or "hot" heat exchanger (32, 39), the outside heat exchanger (30) and the cooling heat exchanger (50) being interconnected so as to form a single module suitable for being preassembled prior to being mounted in the vehicle.

2. Apparatus according to claim 1, **characterized in that:**
· the cold source (16) comprises a first refrigerant/ coolant heat exchanger (24) thermally coupling the main refrigerant circuit to a first secondary coolant circuit (26) capable of being selectively connected to the cooling heat exchanger (50), to the outside heat exchanger (30), and to a "cold" heat exchanger (32); and
· the hot source (18) comprises a second refrigerant/ coolant heat exchanger (34) thermally coupling the main refrigerant circuit (14) to a second secondary coolant circuit (36) capable of being selectively connected to the cooling heat exchanger (50), to the outside heat exchanger (30), and to a "hot" heat exchanger (39).

3. Apparatus according to claim 2, **characterized in that** the first and second secondary circuits (26, 36) are capable of being connected to the cooling circuit (48) via:
· a first bypass valve (52) of the three-port type comprising a first port connected to the outlets of the first and second refrigerant/coolant heat exchangers (24, 34), a second port connected to the inlet of the outside heat exchanger (30), and a third port connected to a branch of the cooling circuit (48) upstream from the cooling heat exchanger (50); and
· a second bypass valve (54) of the three-port type comprising a first port connected to the inlets of the first and second refrigerant/coolant heat exchangers (24, 34), a second port connected to a branch of the cooling circuit (48) downstream from the cooling heat exchanger (50), and a third port connected to the outlet of the outside heat exchanger (30).

4. Apparatus according to claim 2, **characterized in that** the first and second secondary circuits (26, 36) are suitable for being connected to the cooling circuit (48) via:
· a first bypass valve (56) of the two-port type comprising a first port connected to a branch of the cooling circuit (48) upstream from the cooling heat exchanger (50), and a second port connected to branches of the first and second secondary circuits (26, 36) upstream from the outside heat exchanger (30); and
· a second bypass valve (58) of the two-port type comprising a first port connected to a branch of the cooling circuit (48) downstream from the cooling heat exchanger (50), and a second port connected to branches of the first and second secondary circuits (26, 36) downstream from the outside heat exchanger (30).

5. Apparatus according to any preceding claim, **characterized in that** the cooling heat exchanger (50) is a coolant/air heat exchanger.

6. Apparatus according to any preceding claim, **characterized in that** the coolant liquid of the cooling circuit (48) is a mixture of water and antifreeze.

7. Apparatus according to any preceding claim, **characterized in that** the exothermal part is a motor.

8. A method of implementing the apparatus according to any preceding claim, **characterized in that** the coolant liquid of at least one of the secondary circuits (26, 36) is caused to circulate both through the outside heat exchanger (30) and through the cooling heat exchanger (50).

9. A method of implementing the apparatus according to any one of claims 2 and 5 to 6 taken in combination with claim 4, **characterized in that** the coolant liquid of the cooling circuit (48) is caused to circulate both through the outside heat exchanger (30) and the cooling heat exchanger (50).

## Patentansprüche

1. Vorrichtung zur thermischen Regelung für Kraftfahrzeuge, umfassend:
- eine Wärmepumpe (12), die einen Kompressionskältemittel-Hauptkreislauf (14) aufweist, der einer kalten Quelle (16) Kalorien entzieht, um sie zu einer warmen Quelle (18) zu transferieren,
- wobei die kalte Quelle (16) oder die warme Quelle (18) einen Kältemittel/Wärmeübertragungsflüssigkeit-Wärmetauscher (24, 34) aufweist, der den Kältemittel-Hauptkreislauf (14) thermisch an einen Wärmeübertragungsflüssigkeits-Nebenkreislauf (26, 36) koppelt, der selektiv an zumindest zwei Wärmetauscher angeschlossen werden kann,
**dadurch gekennzeichnet, dass** sie weiterhin Mittel zur Kühlung eines exothermen Organs des Fahrzeugs umfasst, die einen Wärmeübertragungsflüssigkeitskreislauf (48) umfassen, bezeichnet als Kühlkreislauf, angeschlossen an einen Wärmetauscher (50) zur Kühlung, wobei der Nebenkreislauf (26, 36) selektiv an den Tauscher (50) zur Kühlung, einen Wärmetauscher, bezeichnet als äußerer Wärmetauscher (30), und einen Wärmetauscher, bezeichnet als kalter (32) oder warmer (39) Wärmetauscher, angeschlossen werden kann, wobei der äußere Tauscher (30) und der Tauscher (50) zur Kühlung untereinander so verbunden sind, dass sie ein Einzelmodul bilden, das vor Einbau in das Fahrzeug vormontierbar ist.

2. Vorrichtung nach Anspruch 1, **dadurch gekennzeichnet, dass:**
- die kalte Quelle (16) einen ersten Kältemittel/Wärmeübertragungsflüssigkeit-Wärmetauscher (24) aufweist, der den Kältemittel-Hauptkreislauf thermisch an einen ersten Wärmeübertragungsflüssigkeits-Nebenkreislauf (26) koppelt, der selektiv an den Tauscher (50) zur Kühlung, den äußeren Tauscher (30) und einen Wärmetauscher, bezeichnet als kalter Wärmetauscher (32), angeschlossen werden kann, und
- die warme Quelle (18) einen zweiten Kältemittel/Wärmeübertragungsflüssigkeit-Wärmetauscher (34) aufweist, der den Kältemittel-Hauptkreislauf (14) thermisch an einen zweiten Wärmeübertragungsflüssigkeits-Nebenkreislauf (36) koppelt, der selektiv an den Tauscher (50) zur Kühlung, den äußeren Tauscher (30) und einen Wärmetauscher, bezeichnet als warmer Wärmetauscher (39), angeschlossen werden kann.

3. Vorrichtung nach Anspruch 2, **dadurch gekennzeichnet, dass** der erste (26) und zweite (36) Nebenkreislauf an den Kühlkreislauf (48) anschließbar sind mittels:
- eines ersten Bypassventils (52), mit drei Wegen, umfassend einen ersten Weg, der an die Ausgänge des ersten (24) und zweiten (34) Kältemittel/Wärmeübertragungsflüssigkeit-Tauschers angeschlossen ist, einen zweiten Weg, der an den Eingang des äußeren Tauschers (30) angeschlossen ist, und einen dritten Weg, der an einen Zweig des Kühlkreislaufs (48) stromauf des Tauschers (50) zur Kühlung angeschlossen ist, und
- eines zweiten Bypassventils (54), mit drei Wegen, umfassend einen ersten Weg, der an die Eingänge des ersten (24) und zweiten (34) Kältemittel/Wärmeübertragungsflüssigkeit-Tauschers angeschlossen ist, einen zweiten Weg, der an einen Zweig des Kühlkreislaufs (48) stromab des Tauschers (50) zur Kühlung angeschlossen ist, und einen dritten Weg, der an den Ausgang des äußeren Tauschers (30) angeschlossen ist.

4. Vorrichtung nach Anspruch 2, **dadurch gekennzeichnet, dass** der erste (26) und zweite (36) Nebenkreislauf an den Kühlkreislauf (48) anschließbar sind mittels:
- eines ersten Bypassventils (56), mit zwei Wegen, umfassend einen ersten Weg, angeschlossen an einen Zweig des Kühlkreislaufs (48), stromauf des Tauschers (50) zur Kühlung, und einen zweiten Weg, angeschlossen an Zweige des ersten (26) und zweiten (36) Nebenkreislaufs, stromauf des äußeren Tauschers (30), und
- eines zweiten Bypassventils (58), mit zwei Wegen, umfassend einen ersten Weg, angeschlossen an einen Zweig des Kühlkreislaufs (48), stromab des Tauschers (50) zur Kühlung, und einen zweiten Weg, angeschlossen an Zweige des ersten (26) und zweiten (36) Nebenkreislaufs stromab des äußeren Tauschers (30).

5. Vorrichtung nach einem der vorstehenden Ansprüche, **dadurch gekennzeichnet, dass** der Tauscher (50) zur Kühlung ein Wärmeübertragungsflüssigkeit/Luft-Tauscher ist.

6. Vorrichtung nach einem der vorstehenden Ansprüche, **dadurch gekennzeichnet, dass** die Wärmeübertragungsflüssigkeit des Kühlkreislaufs (48) ein Gemisch aus Wasser und Frostschutzmittel ist.

7. Vorrichtung nach einem der vorstehenden Ansprüche, **dadurch gekennzeichnet, dass** das exotherme Organ ein Motor ist.

8. Verfahren zur Inbetriebnahme der Vorrichtung nach einem der vorstehenden Ansprüche, **gekennzeichnet durch** das Zirkulierenlassen der Wärmeübertragungsflüssigkeit zumindest eines Nebenkreislaufs (26, 36) gleichzeitig im äußeren Tauscher (30) und im Tauscher (50) zur Kühlung.

9. Verfahren zur Inbetriebnahme der Vorrichtung nach einem der Ansprüche 2 und 5 bis 6 in Kombination mit Anspruch 4, **gekennzeichnet durch** das Zirkulierenlassen der Wärmeübertragungsflüssigkeit des Kühlkreislaufs (48) gleichzeitig im äußeren Tauscher (30) und im Tauscher (50) zur Kühlung.
